# EUROPÄISCHE PATENTSCHRIFT

(11) **EP 3 676 006 B1**
(45) Veröffentlichungstag und Bekanntmachung des Hinweises auf die Patenterteilung: **02.11.2022**
(21) Anmeldenummer: 18769697.6
(22) Anmeldetag: 14.09.2018
(51) Int. Cl.: B01L 3/00, G01N 1/04, G01N 1/28

(54) **SAMMELEINRICHTUNG UND VERFAHREN ZUM SAMMELN DISSEKTIERTER ODER ABLATIERTER PROBEN UND MIKROSKOP MIT EINER SOLCHEN EINRICHTUNG**
COLLECTION DEVICE AND METHOD FOR COLLECTING DISSECTED OR ABLATED SPECIMENS AND MICROSCOPE HAVING SUCH A DEVICE
ÉQUIPEMENT COLLECTEUR ET PROCÉDÉ DESTINÉ À COLLECTER DES ÉCHANTILLONS DISSÉQUÉS OU ABLATIS ET MICROSCOPE POURVU D'UN TEL ÉQUIPEMENT

(30) Priorität: 14.09.2017 DE 102017121326
(43) Veröffentlichungstag der Anmeldung: 08.07.2020
(73) Patentinhaber: Leica Microsystems CMS GmbH, 35578 Wetzlar (DE)
(72) Erfinder: SIEMENSEN, Christian, 55129 Mainz (DE)
(74) Vertreter: DehnsGermany Partnerschaft von Patentanwälten
(86) Internationale Anmeldenummer: PCT/EP2018/074896
(87) Internationale Veröffentlichungsnummer: WO 2019/053195

(56) Entgegenhaltungen:
- EP-A1- 2 912 453
- DE-A1- 10 135 091
- DE-A1- 19 804 800
- DE-A1-102006 033 889

## Beschreibung

Die vorliegende Erfindung betrifft eine Sammeleinrichtung und ein Verfahren zum Sammeln dissektierter oder ablatierter Proben und ein Laser-Mikroskopsystem mit einer solchen Einrichtung. Die Erfindung liegt somit auf dem Gebiet der Lasermikrodissektion sowie anderer Verfahren zur Ablation oder Dissektion von Proben aus einem Objekt. Die Bildgebung und Untersuchung solcher Objekte vor und/oder während und/oder nach der Dissektion bzw. Ablation einer Probe erfolgt in der Regel unter Verwendung eines Mikroskops.

### Stand der Technik

Unter dem Begriff "Laser-Mikroskopsystem" soll vorliegend ein LaserMikrodissektionssystem oder ein Laserablationssystem verstanden werden, aber auch andere Systeme, die ein aufrechtes oder ein inverses Mikroskop in Verbindung mit einem von einem Laser erzeugten Laserstrahl zur Dissektion oder Ablation einer Probe aus einem Objekt einsetzen.

Verfahren zur Bearbeitung biologischer Proben durch Lasermikrodissektion existieren bereits seit Mitte der 1970er Jahre und wurden seitdem kontinuierlich weiterentwickelt. Bei der Lasermikrodissektion können Zellen, Geweberegionen usw. aus einer biologischen Probe ("Objekt") isoliert und als sogenannte Dissektate gewonnen werden. Ein besonderer Vorteil der Lasermikrodissektion ist der kurze Kontakt der Probe mit dem Laserstrahl, durch den diese kaum verändert wird. Die Gewinnung der Dissektate kann auf unterschiedliche Weise erfolgen.

Beispielsweise kann in bekannten Verfahren aus einer Probe mittels eines Ultraviolettlaserstrahls durch eine mit dem Laserstrahl erzeugte Schnittlinie ein Dissektat isoliert werden, das unter dem Einfluss der Schwerkraft in einen geeigneten Dissektatauffangbehälter fällt. Das Dissektat kann dabei aus der Probe auch zusammen mit einer an der Probe anheftenden Membran ausgeschnitten werden. Bei der sogenannten "Laser Capture Microdissection" wird hingegen eine thermoplastische Membran mittels eines entsprechenden Infrarot-Laserstrahls erwärmt. Dabei verschmilzt die Membran mit dem gewünschten Bereich der Probe und kann in einem darauffolgenden Schritt durch Reißen entfernt werden. Eine weitere Alternative besteht darin, das Dissektat mittels des Laserstrahls an einen Deckel eines Dissektatauffangbehälters anzuheften. Bei bekannten inversen Mikroskopsystemen zur Lasermikrodissektion können mittels eines Transportpulses nach oben transportierte Dissektate auch an den Boden eines Dissektatauffangbehälters, der mit einer adhäsiven Beschichtung versehen ist, angeheftet werden.

Bekannte Mikroskopsysteme zur Lasermikrodissektion weisen eine Auflichteinrichtung auf, in deren Strahlengang ein Laserstrahl eingekoppelt wird. Der Laserstrahl wird durch das jeweils verwendete Mikroskopobjektiv auf die Probe fokussiert, die auf einem motorisch verfahrbaren Mikroskoptisch aufliegt. Eine Schnittlinie kann dadurch erzeugt werden, dass der Mikroskoptisch beim Schneiden verfahren wird, um die Probe relativ zu dem feststehenden Laserstrahl zu bewegen. Dies hat jedoch unter Anderem den Nachteil, dass die Probe während des Erzeugens der Schnittlinie nicht ohne weiteres betrachtet werden kann, da sich die Probe im Gesichtsfeld bewegt und das Bild ohne weitere Kompensationsmaßnahmen verschwommen bzw. verschmiert erscheint.

Vorteilhafter sind daher Lasermikrodissektionssysteme, die Laserablenk- bzw. Laserscaneinrichtungen aufweisen, die dazu eingerichtet sind, den Laserstrahl bzw. dessen Auftreffpunkt auf der zu dissektierenden feststehenden Probe zu bewegen. Derartige Lasermikrodissektionssysteme, die auch im Rahmen der vorliegenden Erfindung zum Einsatz kommen sollen und dort besondere Vorteile bieten, werden unten im Detail erläutert. Ein besonders vorteilhaftes Laser-Mikroskopsystem, das eine Laserablenkeinrichtung mit gegeneinander verstellbaren Glaskeilen im Laserstrahlengang aufweist, ist beispielsweise in der EP 1 276 586 B1 beschrieben.

In beiden Fällen, also in Systemen mit bewegter oder feststehender Probe, wird in der Regel mit gepulsten Lasern gearbeitet, wobei durch jeden Laserpuls ein Loch bzw. eine Vertiefung in der Probe erzeugt wird. Eine Schnittlinie entsteht durch eine Aneinanderreihung derartiger Löcher bzw. Vertiefungen, gegebenenfalls mit Überlappung.

Die Lasermikrodissektion kann zur Gewinnung von Einzelzellen, Zellkompartimenten oder definierten Gewebebereichen mit beispielsweise einem Durchmesser von etwa 500 µm genutzt werden. Bei geeigneter Ansteuerung kann der Laserstrahl auch deutlich größere Bereiche ausschneiden, die lediglich durch die Größe des Objektträgers begrenzt sind, auf welchem die zu schneidende Probe angeordnet ist.

In der Regel haben die Dissektate jedoch nur eine Größe im µm-Bereich, beispielsweise um die 20 µm oder darunter, die mit einem Laserstrahl vom umliegenden Gewebe separiert und anschließend beispielsweise unterschiedlichen diagnostischen Analyseverfahren unterworfen werden. In der Onkologie kann die Lasermikrodissektion beispielsweise dafür eingesetzt werden, um spezifische (Tumor-) Zellen aus einem mikroskopischen Schnitt zu isolieren und diese auf spezifische Metaboliten, RNA-Expressionslevel, DNA-Mutationen oder Proteine zu untersuchen.

Bei dem oben erwähnten Lasermikrodissektionssystem gemäß EP 1 276 586 B1 kommt eine Scaneinrichtung zum Einsatz, um den Laserstrahlfokus senkrecht zur optischen Achse in der Objektebene zu verschieben. Diese Scaneinrichtung arbeitet mit zwei optischen Keilen (Prismen, Glas-Keilplatten), deren Flächen gegen die optische Achse geneigt sind (Keilwinkel) und die um die optische Achse drehbar gelagert sind. Durch Drehung der optischen Keile gegeneinander wird eine Strahlablenkung des Laserstrahls erzeugt, sodass der Laserstrahlfokus auf definierte Weise in der Objektebene verschoben werden kann, um eine dort befindliche Probe zu dissektieren. Bezüglich Aufbau- und Funktionsweise dieser Scaneinrichtung sei ausdrücklich auf die genannte europäische Patentschrift EP 1 276 586 B1 verwiesen. In der Praxis zeichnen sich entsprechende Systeme durch ein aufrechtes Grundstativ mit festem, nicht in z-Richtung (senkrecht zur Objektebene) beweglichen Objektivrevolver aus, wobei zur Fokuseinstellung der Mikroskoptisch in besagte z-Richtung bewegt wird. Während der Dissektion ist der Mikroskoptisch in x- und y-Richtung (also in der Objektebene) fest.

Andere Lasermikrodissektionssysteme basieren in der Regel auf inversen Mikroskopen und bedienen sich eines fixen Laserstrahls (ohne Scaneinrichtung), sodass die Probe mittels Bewegung des Mikroskoptisches in x- und y-Richtung geschnitten wird. Die Fokuseinstellung erfolgt bei solchen Systemen durch Bewegen des Objektivrevolvers in z-Richtung, der Mikroskoptisch selbst kann in z-Richtung dann in der Regel nicht bewegt werden.

Aus der DE 103 22 348 B4 ist eine Vorrichtung zum berührungsfreien Transfer von durch die membrangestützte Lasermikrodissektion gewonnenen Dissektaten bekannt. Unter der Voraussetzung, dass der Ausschneideprozess das ausgeschnittene Dissektat elektrostatisch auflädt, kann der Transfer in ein Aufnahmegefäß hinein elektrostatisch unterstützt werden. Hierzu sind zwei linear angeordnete Elektroden unterhalb des Objekts angeordnet und entgegengesetzt zur Ladung des elektrostatisch geladenen Dissektats geladen. Oberhalb des Objekts befindet sich eine weitere Elektrode, die den Ausschneideprozess unterstützen kann, indem sie gleichsinnig zur Probe bzw. dem Dissektat geladen ist. Die resultierenden Coulombkräfte ziehen das Dissektat in Richtung der Elektrode unterhalb des Aufnahmegefäßes. Die dort beschriebene Methode birgt den Nachteil, dass man darauf angewiesen ist, dass sich die Probe, also das Dissektat, durch den Ausschneideprozess immer elektrostatisch auflädt. Dies ist je nach Umgebungsbedingungen (Luftfeuchte, z.B. im Inkubator, Zusammensetzung der Proben (feuchte oder trockene Proben, Salzgehalt der Proben etc.)) nicht kontrollierbar. Bei elektrisch neutralen Proben kann das elektrostatische Prinzip seine Wirkung nicht reproduzierbar entfalten oder ist mit einem großen technischen Aufwand verbunden. In der beschriebenen Methode sorgt eine zweite Elektrode ähnlich zu einem Steuergitter in einer Röhre, die der Elektrode unter dem Auffanggefäß vorgeschaltet ist, für eine Vorbeschleunigung der geladenen Probe bzw. des Dissektats. Dies kann je nach Ladung der Probe und Spannung der Zwischenelektrode dazu führen, dass die Probe im Bereich dieser Elektrode haften bleibt und somit nicht mehr auffindbar ist. Der Steuerungsprozess für die Spannungen an den drei Elektroden sowie der mechanische Aufbau werden dadurch sehr kompliziert und entsprechend kostspielig.

Die DE 10 2006 033 889 A1 betrifft eine elektrophoretische Elektrodenanordnung mit Ringelektroden zur Manipulation suspendierter Partikel, wobei die Ringelektroden zur Anziehung oder zur Abstoßung von Partikel in einem Feldkäfig angesteuert werden. In einem Beispiel eines mikrofluidischen Systems wird ein Feldkäfig derart angesteuert, dass im Trägerstrom vorhandene Partikel (Viren) sich an bereits auf einem Träger befindliche Partikel (Zellen) anlagern. Der andere Feldkäfig wird dagegen elektrisch so angesteuert, dass er die Partikel (Viren) abstößt, um eine Anlagerung dieser Partikel an die anderen Partikel (Zellen) zu verhindern.

Die DE 101 35 091 A1 betrifft eine Einrichtung zur Mikrodissektion mit einem Präparat, das sich auf einer Trägerfolie mit magnetischen Partikeln befindet. Als Auffangbehältnis ist ein Kunststoffnapf vorgesehen, an dessen unterer Bodenseite ein Ringkernmagnet angeordnet ist. Aufgrund der magnetischen Anziehungskraft des Ringkernmagnets auf das Dissektat, das magnetische Partikel trägt, wird das Dissektat in das Innere des Auffanggefäßes verbracht.

Aus der DE 198 04 800 C2 ist eine Vorrichtung zur automatisierten Bergung dissektierter membrangestützter Proben und deren Transfer in ein nachgeordnetes Auffanggefäß bekannt. Hierzu wird im Bereich des Auffanggefäßes ein elektrisches oder magnetisches Feld erzeugt, welches das elektrisch geladene Mikrodissektat bzw. das magnetisierte Mikrodissektat anzieht. Voraussetzung ist auch hier eine elektrisch geladene oder eine magnetisierte Probe oder Membran, so dass für neutrale Proben die bereits oben geschilderten Nachteile bestehen.

Bei der Laser-Dissektion oder der Ablation von Proben fallen, wie oben bereits erläutert, die ausgeschnittenen Proben in ein Auffangbehältnis bzw. werden dorthin transferiert. Die ausgeschnittenen Proben können anschließend im Auffangbehältnis mittels eines Mikroskops mit einem Objektiv geringer Vergrößerung identifiziert werden. Dabei kommt es häufig vor, dass die ausgeschnittenen Proben gesucht werden müssen, wodurch sich die Durchlaufzeit von Experimenten enorm verlängert. Die Probe und/oder das Auffangbehältnis kann auch elektrostatisch aufgeladen sein, wodurch die Gefahr besteht, dass die ausgeschnittene Probe nicht mehr auffindbar ist, da sie am Rand des Auffangbehältnisses oder an dem Objekthalter oberhalb des Auffangbehältnisses anhaftet.

Aufgabe der vorliegenden Erfindung ist daher, die oben genannten Nachteile bei der Dissektion oder Ablation von Proben zu vermeiden und insbesondere die Möglichkeit zu schaffen, neutrale und insbesondere auch elektrostatisch geladene Proben zuverlässig in ein Auffanggefäß und insbesondere in einen vordefinierten Bereich eines Auffanggefäßes zu transferieren.

### Beschreibung der Erfindung

Zur Lösung der genannten Aufgabe schlägt die vorliegende Erfindung eine Sammeleinrichtung zum Sammeln von aus einem Objekt dissektierten oder ablatierten Proben, ein Laser-Mikroskopsystem sowie ein entsprechendes Verfahren gemäß den unabhängigen Patentansprüchen vor. Vorteilhafte Ausgestaltungen ergeben sich aus den jeweiligen Unteransprüchen und der nachfolgenden Beschreibung.

Eine erfindungsgemäße Sammeleinrichtung zum Sammeln von dissektierten oder ablatierten Proben weist mindestens ein Auffangbehältnis zum Auffangen der Proben auf, wobei dieses Auffangbehältnis üblicherweise eine zum Objekt hin gerichtete Öffnung aufweist, durch die die dissektierten oder ablatierten Proben hindurch treten. Des Weiteren ist mindestens ein Elektrodenpaar auf der dem Objekt und somit der Öffnung des Auffangbehältnisses abgewandten Seite des Bodens des Auffangbehältnisses oder auch unmittelbar am oder im Boden des Auffangbehältnisses angeordnet. Fällt die Probe nach Dissektion oder Ablation durch Gravitation in das Auffangbehältnis, so befindet sich das Elektrodenpaar bspw. unterhalb des Bodens des Auffangbehältnisses. Die Sammeleinrichtung weist weiterhin mindestens eine Spannungsversorgung zur Anlegung einer Spannung an die Elektroden des Elektrodenpaars auf, wobei ein konzentrisch angeordnetes Elektrodenpaar vorgesehen ist und wobei die an das Elektrodenpaar angelegte Spannung zumindest im Bereich des Auffangbehältnisses ein divergentes elektrisches Feld erzeugt.

Im Folgenden soll zur einfacheren Erläuterung der Erfindung ohne Beschränkung der Allgemeinheit insbesondere der Fall der Dissektion von Proben betrachtet werden, wobei die Probe ohne angelegte Spannung an das Elektrodenpaar unter Einfluss der Gravitationskraft in das Auffangbehältnis transferiert wird. Die anderen Fälle der Ablation einer Probe sowie des Probentransfers entgegen der Schwerkraft sollen der Einfachheit halber nicht näher erläutert werden, ohne dass hierdurch eine Beschränkung der Erfindung verbunden sein soll.

Durch geeignete Geometrie des Elektrodenpaars kann ein stark inhomogenes elektrisches Feld erzeugt werden. Dieses induziert ein Dipolmoment in der Probe, die gewöhnlich dielektrisch ist. Auf den Dipol wirkt eine Kraft, die die Probe in Bereiche hoher Felddivergenz bewegt. Diese Kraft ist abhängig vom induzierten Dipolmoment und der Divergenz des elektrischen Feldes. Stark divergente Felder üben folglich eine höhere Kraft auf den Dipol und somit auf die Probe aus als schwach divergente Felder. Dieser als Dielektrophorese bekannte physikalische Effekt wird vorliegend erfindungsgemäß zum Sammeln von dissektierten oder ablatierten Proben in ein Auffangbehältnis genutzt. Mit einem Elektrodenpaar unter dem Auffangbehältnis bzw. in oder am Boden des Auffangbehältnisses kann über das Anlegen einer hohen Spannung ein stark divergentes elektrisches Feld im Bereich des Auffangbehältnisses, also innerhalb des Auffangbehältnisses und im Bereich seiner Umgebung bis zum Ort der Dissektion oder Ablation, erzeugt werden. Da die dissektierten oder ablatierten Proben zumeist dielektrisch sind, wirkt auf diese eine Kraft, die in Richtung der höchsten Felddivergenz ausgerichtet ist. Somit kann die Position, an der sich die dissektierten oder ablatierten Proben sammeln, in Abhängigkeit vom Verlauf des elektrischen Feldes bestimmt werden.

Erfindungsgemäß wird ein konzentrisch angeordnetes Elektrodenpaar mit einer inneren und einer äußeren Elektrode verwendet. Hierbei ist es vorteilhaft, wenn die äußere Elektrode ihrerseits konzentrisch zum Umfang des Auffangbehältnisses ist, denn somit werden die Proben in der Mitte des Auffangbehältnisses gesammelt. Hierbei ist es wiederum vorteilhaft, wenn die äußere Elektrode im Wesentlichen die gleichen Abmessungen wie der Umfang des Auffangbehältnisses, insbesondere der Umfang des Bodens des Auffangbehältnisses, besitzt und die innere Elektrode im Bereich der Mittelachse des Auffangbehältnisses, also beispielsweise im Bereich der Bodenmitte des Auffangbehältnisses, angeordnet ist. Die Proben sammeln sich dann um die zentrale innere Elektrode. Erfindungsgemäß wird eine als Elektrodenspitze ausgebildete Elektrode verwendet. Als äußere Elektrode kann eine ringförmige Elektrode eingesetzt werden, wobei die Elektrode auch einen oder mehrere Ring- bzw. Kreissegmente aufweisen kann. Als besonders vorteilhaft hat sich eine ringförmige äußere Elektrode erwiesen, die konzentrisch zum Umfang des Bodens des Auffangbehältnisses verläuft und konzentrisch eine innere Elektrodenspitze umgibt. Damit sich das elektrische Feld in das Innere des Auffangbehältnisses und möglichst weit zum Ort der Dissektion oder Ablation ausbreiten kann, darf das Auffangbehältnis selbst nicht elektrisch leitend sein. Unter "ringförmig" sei auch eine Elektrode verstanden, die als eine Platte mit kreisrunder Öffnung oder als Ringscheibe ausgeführt ist. Das Elektrodenpaar kann beispielsweise aus einem bedruckten Streifenleiter bestehen, zum Beispiel in Form einer Folie, die ihrerseits unterhalb oder aber auf dem Boden des Auffangbehältnisses angeordnet sein kann.Das Prinzip der Dielektrophorese wird bisher insbesondere zum Einfangen von biologischen Teilchen eingesetzt. Aus der US 4,956,065 ist eine Methode bekannt, um in einem mittels einer speziellen Elektrodenkonfiguration erzeugten elektrischen Feld ein neutrales Teilchen wie eine biologische Zelle frei schweben zu lassen, um dieses Teilchen mikroskopisch untersuchen und abbilden zu können.

Aus der US 8,021,532 B2 ist eine aus einer speziellen Elektrodenkonfiguration gebildete Pinzette zum Einfangen von Molekülen mittels Dielektrophorese bekannt.

Weiterhin ist aus der US 7,704,363 B2 eine Einrichtung bekannt, mittels derer eine polare Substanz, die ein Dipolmoment besitzt, wie eine Nukleinsäure, Proteine, Kohlenhydrate, Zellen etc., und die entlang eines Weges transportiert wird, in einer Konzentrationszone gefangen und gesammelt wird, die durch ein elektrisches Wechselfeld gebildet wird, das senkrecht zu dem Transportweg der polaren Substanz verläuft.

Die dissektierten oder ablatierten Proben sammeln sich vorteilhafterweise am Boden des Auffangbehältnisses um die innere zentrale Elektrode herum. Der Anwender kann somit schneller die ausgeschnittenen Proben finden. Im Falle elektrostatischer Aufladung z.B. der Proben oder des Auffangbehältnisses gelangen die Proben dennoch zuverlässig in das Innere des Auffangbehältnisses, ohne bereits am Objekthalter oder am Rand des Auffangbehältnisses haften zu bleiben. Dies gibt dem Anwender einen erheblichen Zeitvorteil bei der Analyse seiner Proben und gibt ihm insbesondere im Falle der Laserablation, bei der die Probengröße wenige µm selten übersteigt, die Gewissheit, die Proben auch tatsächlich eingefangen zu haben.

Neben der dielektrischen Kraft aufgrund des divergenten elektrischen Feldes wirkt auf die Probe die Gravitationskraft, die je nach Felddivergenz einige Größenordnungen größer sein kann als die dielektrische Kraft. Eigentlich ließe sich die Probe deshalb vor allem bei größeren Abständen zwischen Objekt und Boden des Auffangbehältnisses kaum lenken. Doch die kleine Partikelgröße der Proben im Bereich weniger µm bewirkt, dass die Probe innerhalb weniger ms durch die Stokesche Reibung in der Luft bzw. im umgebenden Gas abgebremst wird und mit einer konstanten Geschwindigkeit von wenigen mm/s nach unten fällt. Die Reibungskraft gleicht folglich die Gravitationskraft vollständig aus, wodurch die resultierende Kraft die dielektrische Kraft ist. Die Probe fällt somit in die Richtung der höchsten Felddivergenz.

Eine hohe Felddivergenz kann durch spezielle Anordnungen von Elektroden erreicht werden. Eine vorteilhafte Geometrie umfasst ein konzentrisches Elektrodenpaar, insbesondere mit einer geerdeten äußeren Elektrode, in deren Zentrum sich eine Elektrodenspitze befindet, die insbesondere auf einem Hochspannungspotenzial insbesondere zwischen 100 Volt und 10 kV liegt.

Es ist vorteilhaft, wenn die Spannungsversorgung das Elektrodenpaar bzw. bei Erdung der äußeren Elektrode die zentrale Elektrode mit Wechselspannung beaufschlagt. Auf diese Weise kann die dielektrische Kraft auf die Partikel völlig unabhängig von deren Oberflächenladung, die sich bei elektrostatischer Aufladung ergibt, wirken, da sich die elektrostatische Kraft über die Zeit wegmittelt, die dielektrische Kraft jedoch unabhängig von der Polarität des Feldes ist.

In einer weiteren vorteilhaften Ausgestaltung wird die Spannungsversorgung ihrerseits mittels einer Steuereinheit gesteuert oder geregelt und zwar bezüglich der Spannungsamplitude und/oder bezüglich des zeitlichen Spannungsverlaufs. Die Steuereinheit ist insbesondere unter anderem dazu geeignet, Fehlfunktionen, wie Funkenüberschläge oder Kurzschlüsse zu registrieren. Zudem sind vorteilhafterweise durch die Steuereinheit zeitliche Spannungsverläufe, insbesondere aber Gleich- oder Wechselspannung, einstellbar. Weiterhin kann die maximal übertragbare Energiemenge im Fall einer Fehlfunktion durch die Steuereinheit begrenzt werden.

In einer weiteren möglichen Ausführungsform weist die Sammeleinrichtung mehrere Elektrodenpaare auf, die zu einer Matrix bzw. einem Array verschaltet sind, wobei ein einzelnes oder mehrere Auffangbehältnisse vorgesehen sind und wobei zumindest einzelne Elektrodenpaare auf der dem Objekt abgewandten Seite des Bodens des einen Auffangbehältnisses oder auf der dem Objekt abgewandten Seite des Bodens jeweils eines Auffangbehältnisses angeordnet sind. Alternativ hierzu können die Elektrodenpaare auch im oder am Boden des einen Auffangbehältnisses bzw. jeweils eines Auffangbehältnisses angeordnet sein. Auf diese Weise kann eine Probensammlung in mehrere Gefäße ermöglicht werden oder die Proben können in einem großen Gefäß ortsabhängig gesammelt werden.

Die Erfindung betrifft weiterhin ein Laser-Mikroskopsystem zur Dissektion oder Ablation von Proben aus einem Objekt mit einem Mikroskop mit einem Objekthalter zur Aufnahme des Objekts und einem Objektiv, das eine optische Achse definiert, weiterhin mit einem Laser und einem von dem Laser erzeugten Laserstrahl zur Dissektion oder Ablation einer Probe aus dem Objekt, und mit einer erfindungsgemäßen Sammeleinrichtung zum Sammeln der dissektierten oder ablatierten Proben, wie sie oben ausführlich beschrieben ist.

Solche Laser-Mikroskopsysteme sind im Stand der Technik bspw. als Lasermikrodissektionssysteme oder als Laserablationssysteme beschrieben und bekannt. Sie können im Auflicht oder im Durchlicht arbeiten und aufrechte oder inverse Mikroskope einsetzen. Bei einem typischen Lasermikrodissektionssystem wird das Objekt im Auflicht beleuchtet und der Auflichtbeleuchtungsstrahlengang in das Mikroskop bzw. in die optische Achse des Objektivs eingekoppelt. Auch der die Probe schneidende Laserstrahl wird in das Mikroskop eingekoppelt und über das Mikroskopobjektiv geführt. Ohne Beschränkung der Allgemeinheit soll zur weiteren Illustration der vorliegenden Erfindung von diesem Spezialfall ausgegangen werden, ohne dass damit eine Beschränkung auf ein solches Lasermikrodissektionssystem verbunden sein soll.

Erfindungsgemäß wird bei einem solchen Laser-Mikroskopsystem über die erfindungsgemäße Sammeleinrichtung im Bereich des Auffangbehältnisses, also innerhalb des Auffangbehältnisses und im Bereich seiner Umgebung bis zum Ort der Dissektion oder Ablation, ein stark divergentes elektrisches Feld erzeugt. Zu den sich hieraus ergebenden Vorteilen und zu weiteren Ausgestaltungen sei auf obige Ausführungen im Zusammenhang mit der erfindungsgemäßen Sammeleinrichtung verwiesen.

Es ist zweckmäßig, wenn der Objekthalter auf einem Mikroskoptisch angeordnet ist, wobei der Mikroskoptisch geerdet oder nicht-leitend ist. Gleiches gilt zweckmäßigerweise für den Objekthalter selbst. In dem beschriebenen Spezialfall des Lasermikrodissektionssystems wird üblicherweise das Objekt auf einer Membran aufgebracht, die ihrerseits auf einem rahmenförmigen metallischen Objekthalter sitzt, der zweckmäßigerweise geerdet ist. Alternativ dazu kann ein Objektträger aus Glas verwendet werden, der dann zur Ablation oder Dissektion mit der Objektseite in Richtung des Auffangbehältnisses eingesetzt wird. Die Erdung der genannten Komponenten ist zweckmäßig, um weitere Felddivergenzen im Bereich des Mikroskoptisches bzw. des Objekthalters zu vermeiden.

Als besonders vorteilhaft hat sich eine Elektrodenanordnung erwiesen, bei der die äußere ringförmige Elektrode geerdet ist und konzentrisch die innere Elektrodenspitze umgibt, wobei die innere Elektrode auf oder nahe der optischen Achse angeordnet ist.

Im Allgemeinen weist das Laser-Mikroskopsystem eine Beleuchtungseinrichtung auf, die einen Beleuchtungsstrahlengang erzeugt und diesen auf die Objektebene des Mikroskops richtet. Hierbei kann es sich um einen Auflicht- oder um einen Durchlichtbeleuchtungsstrahlengang handeln. Wird der Beleuchtungsstrahlengang von der Seite des Auffangbehältnisses auf das Objekt gerichtet, so ist auf einen möglichst geringen Lichtverlust durch die Elektrodenanordnung zu achten. Hierzu ist es vorteilhaft, wenn die äußere Elektrode ringförmig ausgestaltet ist und einen Durchmesser aufweist, der im Wesentlichen gleich dem Durchmesser des Beleuchtungsstrahlenganges im Ort der äußeren Elektrode oder größer als dieser ist. Die innere Elektrode ist wiederum zweckmäßigerweise als Elektrodenspitze insbesondere am Ort der optischen Achse ausgebildet. Auf diese Weise ist eine starke Felddivergenz gewährleistet und andererseits kann möglichst viel Licht passieren.

Schließlich betrifft die Erfindung ein Verfahren zum Sammeln von aus einem Objekt dissektierten oder ablatierten Proben unter Verwendung einer erfindungsgemäßen Sammeleinrichtung oder unter Verwendung eines erfindungsgemäßen Laser-Mikroskopsystems, wobei eine Probe aus einem Objekt dissektiert oder ablatiert wird und die dissektierte oder ablatierte Probe in das Auffangbehältnis der Sammeleinrichtung transferiert wird, wobei das Elektrodenpaar der Sammeleinrichtung derart am Auffangbehältnis angeordnet ist, dass nach Anlegen einer Spannung an das Elektrodenpaar mittels der Spannungsversorgung der Sammeleinrichtung im Bereich des Auffangbehältnisses ein elektrisches Feld mit einer vorbestimmten Felddivergenz erzeugt wird, so dass auf die dissektierte oder ablatierte Probe eine dielektrische Kraft wirkt, die die Probe in das Innere des Auffangbehältnisses lenkt.

Das Elektrodenpaar ist vorteilhafterweise wiederum auf der dem Objekt abgewandten Seite des Bodens des Auffangbehältnisses oder aber am oder im Boden selbst angeordnet. Auch mehrere Auffangbehältnisse mit mehreren zugehörigen Elektrodenpaaren können zum Einsatz kommen, wobei in diesem Fall auch mehrere Spannungsversorgungen vorgesehen sein können. Bezüglich dieser und weiterer Ausgestaltungen sei ausdrücklich auf die obigen Ausführungen in Zusammenhang mit der erfindungsgemäßen Sammeleinrichtung bzw. dem erfindungsgemäßen Laser-Mikroskopsystem verwiesen.

In einer vorteilhaften Ausgestaltung kann durch Wahl eines geeigneten Auffangbehältnisses die Stärke und/oder der Verlauf und/oder die Divergenz des divergenten elektrischen Feldes beeinflusst werden. Sowohl das Material des Auffangbehältnisses, aber insbesondere auch dessen Form spielt insbesondere für den Verlauf des divergenten elektrischen Feldes eine Rolle, so dass über eine besondere Gestaltung des Auffangbehältnisses der Feldgradient gesteuert werden kann. Gleiches gilt in analoger Weise für ein alternativ oder zusätzlich in einen Bereich zwischen dem Elektrodenpaar und dem Objekthalter eingebrachtes dielektrisches Medium.

Schließlich kann es vorteilhaft sein, das Objekt oder zumindest die zu dissektierende oder ablatierende Probe mit einem Dielektrikum zu beschichten oder zu bedrucken, um die dielektrischen Eigenschaften und/oder die Flugbahn der Probe in das Auffangbehältnis zu beeinflussen. Gleiches gilt für den Fall, dass das Objekt auf eine Mikrodissektionsfolie aufgebracht ist. In diesem Fall soll in der gesamten Anmeldung der Ausdruck "Objekt" bzw. "Probe" die Mikrodissektionsfolie mit umfassen.

Es kann weiterhin vorteilhaft sein, das Objekt oder zumindest die zu dissektierende oder ablatierende Probe mit einem Halbleiter oder einem Leiter zu beschichten bzw. zu bedrucken, bevor die Dissektion oder Ablation der Probe erfolgt. Auf diese Weise kann die elektrische Neutralität der ausgeschnittenen Probe gewährleistet werden.

Es sei betont, dass die in Verbindung mit der erfindungsgemäßen Sammeleinrichtung bzw. mit dem erfindungsgemäßen Laser-Mikroskopsystem geschilderten Vorteile und Ausgestaltungen in völlig analoger Weise für das erfindungsgemäße Verfahren gelten. Aus diesem Grunde sind Vorteile und Ausgestaltungen des erfindungsgemäßen Verfahrens zur Vermeidung von Wiederholungen vorliegend nicht im Einzelnen erörtert.

Es versteht sich, dass die vorstehend genannten und nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung, etwaige weitere Ausführungsformen und deren Vorteile sind anhand eines Ausführungsbeispiels in der beigefügten Zeichnung schematisch dargestellt und werden im Folgenden unter Bezugnahme auf die Zeichnung ausführlich beschrieben.

### Figurenbeschreibung

- Figur 1: zeigt schematisch den Aufbau eines Laser-Mikroskopsystems in Form eines Laser-Mikrodissektionsgeräts ohne Sammeleinrichtung,
- Figur 2: zeigt schematisch den Aufbau einer Sammeleinrichtung gemäß einer Ausführungsform der vorliegenden Erfindung zusammen mit einem Ausschnitt des Laser-Mikroskopsystems gemäß Figur 1 und
- Figur 3: zeigt schematisch eine mögliche Ausführungsform eines konzentrischen Elektrodenpaares in Draufsicht.

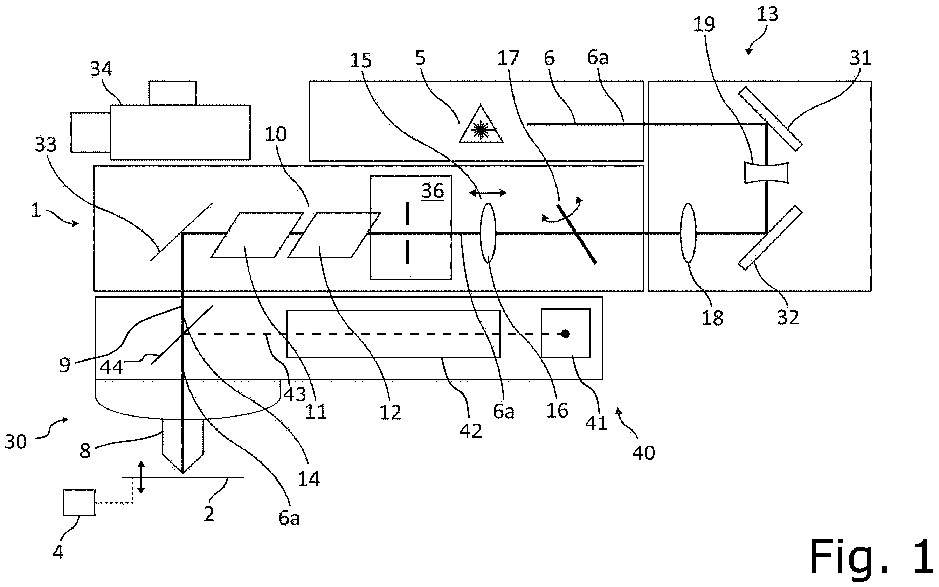

Figur 1 zeigt als Beispiel eines Laser-Mikroskopsystems ein Laser-Mikrodissektionsgerät 1 mit einem Mikroskop 30. Der Mikroskoptisch ist mit 2 bezeichnet, das Mikroskopobjektiv mit 8, der Tubus mit 34. Die Elemente des Laser-Mikrodissektionsgeräts 1 sind gemäß diesem Ausführungsbeispiel wie folgt: Laserlichtquelle 5, die einen Laserstrahl 6 erzeugt, Umlenkelemente 31 und 32 und eine negative Linse 19 sowie eine positive Linse 18; ein beweglicher (Doppelpfeil) Abschwächer ("Attenuator") 17 für den Laserstrahl, bei dem es sich üblicherweise um einen Filter handelt, der die Intensität abhängig von der Stellung des Filters reduziert; eine noch zu behandelnde optische Laserfokus-Verschiebeeinrichtung 15, eine Apertureinrichtung 36, eine Laser-Scaneinrichtung 10 sowie ein weiteres Umlenkelement 33. Weiterhin dargestellt ist eine z-Verstelleinrichtung 4 für den Mikroskoptisch 2, um diesen in z-Richtung zu verschieben (Doppelpfeil).

Die Hauptachse oder optische Achse des Mikroskopobjektivs 8 ist mit 9 bezeichnet. Die z-Richtung verläuft parallel zur Hauptachse 9. Die x-y-Richtung bezeichnet eine Richtung in einer zur Hauptachse 9 senkrecht stehenden Ebene, die hier mit der horizontalen Ebene des Mikroskoptisches 2 des Mikroskops 30 zusammenfällt. Die Achse der Laserstrahl-Ausbreitung ist mit 6a bezeichnet. 13 bezeichnet eine Laser-Umlenkeinheit des Laser-Mikrodissektionsgerätes 1. Weiter dargestellt ist eine Beleuchtungseinrichtung 40 einer Auflichtbeleuchtung mit einer Beleuchtungslichtquelle 41 sowie einer Beleuchtungsoptik 42 zur Erzeugung eines Beleuchtungsstrahlengangs 43 zur Beleuchtung des durch das Mikroskop 30 abgebildeten Objekts auf dem Mikroskoptisch 2. Hierzu wird der Beleuchtungsstrahlengang 43 mittels des Umlenkelements 44 in die optische Achse 9 des Mikroskopobjektivs 8 eingekoppelt. Über entsprechende Schnittstellen am Tubus 34 kann insbesondere während des Schneidvorgangs oder danach das Objekt unmittelbar visuell und/oder von einer Kamera beobachtet werden.

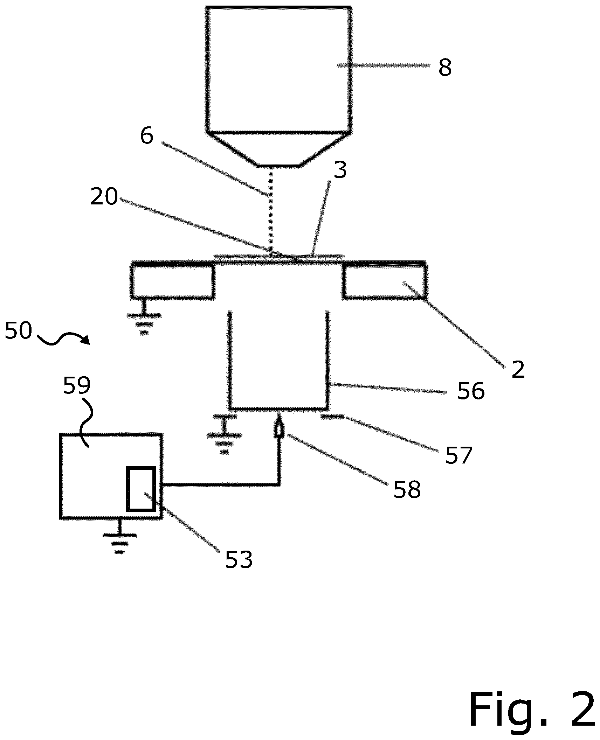

Nähere Einzelheiten zu dem in Figur 1 dargestellten Laser-Mikrodissektionsgerät 1 lassen sich auch aus der deutschen Patentschrift DE 100 18 253 C2 der Anmelderin entnehmen. Insbesondere finden sich dort detaillierte Ausführungen zum Aufbau und zur Funktionsweise der in Figur 1 schematisch dargestellten Laser-Scaneinrichtung 10, die zwei dicke, gegen die optische Achse 14 der Laserstrahl-Ausbreitung geneigte und unabhängig voneinander um diese Achse drehbare Glas-Keilplatten 11 und 12 aufweist. Der Laserstrahl 6, der durch diese Glas-Keilplatten 11 und 12 geführt wird, wird gegenüber der optischen Achse 14 um einen Ablenkwinkel α abgelenkt. Durch Drehung der Keilplatten 11 und/oder 12 kann dieser Ablenkwinkel eingestellt oder variiert werden. Die Dicke und die Schrägstellung der Glas-Keilplatten 11 und 12 ist derart konstruiert, dass für alle Ablenkwinkel α die Mitte der Objektivpupille des Mikroskopobjektivs 8 getroffen wird. Weiterer Vorteil dieser Laser-Scaneinrichtung 10 ist, dass kein x-y-Scantisch als Mikroskoptisch 2 eingesetzt werden muss, da der Mikroskoptisch 2 während des Schneidvorgangs feststehen kann. Die Bewegung des durch das Mikroskopobjektiv 8 auf oder in das Objekt 3 (siehe auch Figur 2) fokussierten Laserstrahls 6 erfolgt in x-y-Richtung nämlich ausschließlich mittels der Laser-Scaneinrichtung 10. Die Apertureinrichtung 36 stellt die Laserstrahlapertur geeignet ein. Die in Figur 1 dargestellten optischen Elemente des Laser-Mikrodissektionsgeräts 1 dienen dazu, den Laserstrahl-Fokus mit einem geeigneten Durchmesser und einer geeigneten Intensität am Objekt zur Verfügung zu stellen, die zum Schneiden desselbigen besonders geeignet sind.

Die schematisch dargestellte optische Fokus-Verschiebeeinrichtung 15 umfasst zumindest eine in Richtung der Achse 6a der Laserstrahl-Ausbreitung verschiebbare Linse 16 (worunter auch ein Linsenglied oder Linsengruppe fallen soll). Die entsprechende Bewegung ist durch den Doppelpfeil angedeutet. Eine solche Linsenbewegung dient dazu, den Laserstrahl-Fokus in z-Richtung zu bewegen. Eine relative Bewegung zwischen Laserstrahl-Fokus und Objekt 3 bzw. Mikroskoptisch 2 kann auch durch z-Verstellung des Mikroskoptisches 2 über die entsprechende z-Verstelleinrichtung 4 erzielt werden.

Figur 2 zeigt schematisch eine besonders vorteilhafte Ausführungsform einer Sammeleinrichtung 50 zum Sammeln von aus einem Objekt 3 insbesondere mittels eines Laser-Mikrodissektionsgeräts 1 gemäß Figur 1 dissektierten Proben. Gleiche Bezugszeichen bezeichnen gleiche Elemente wie in Figur 1.

Figur 2 zeigt schematisch eine unterhalb des Mikroskoptisches 2 angeordnete Sammeleinrichtung 50. Die Sammeleinrichtung 50 weist ein Auffangbehältnis 56 zum Auffangen der dissektierten Proben sowie ein Elektrodenpaar 57, 58 auf, das auf der dem Objekt 3 abgewandten Seite des Bodens des Auffangbehältnisses 56, also unterhalb des Bodens des Auffangbehältnisses 56, angeordnet ist. Zum Anlegen einer Spannung an die Elektroden 57 und 58 des Elektrodenpaars 57, 58 ist eine Spannungsversorgung 53 vorgesehen.

Eine aus dem Objekt 3 mittels Schneiden durch den Laserstrahl 6 dissektierte Probe kann auf diese Weise in das darunterliegende Auffangbehältnis 56 transferiert werden. Bei dem Laserstrahl handelt es sich in der Regel um einen UV-Laserstrahl hoher Energiedichte, der durch das Objektiv 8 auf das Objekt 3 fokussiert wird. Das Objekt 3 ist in der Regel auf einer Membran aufgebracht, die ihrerseits auf einem metallischen Objekthalter 20 sitzt. Alternativ dazu kann ein Objekthalter 20 aus Glas verwendet werden, wobei sich das Objekt dann auf der Unterseite des Objektträgers sich befindet. Es ist vorteilhaft, wenn wie in Figur 2 dargestellt, der Mikroskoptisch 2 geerdet ist. Der Mikroskoptisch 2 trägt seinerseits den Objekthalter 20, der - sofern metallisch - ebenfalls geerdet ist.

Die Elektroden 57 und 58 der Sammeleinrichtung 50 sind in diesem Ausführungsbeispiel als ein konzentrisch angeordnetes Elektrodenpaar vorgesehen, wobei die innere Elektrode 58 als Elektrodenspitze und die äußere Elektrode 57 als ringförmige Elektrode ausgebildet ist. In diesem Ausführungsbeispiel ist die ringförmige äußere Elektrode 57 geerdet, während die innere Elektrode 58 mit einer steuerbaren Spannung (AC und/oder DC) beaufschlagt wird. Hierzu ist die Spannungsversorgung 53 vorgesehen. Es ist vorteilhaft, die innere Elektrode 58 auf ein Hochspannungspotenzial zwischen 100 bis 10.000 Volt zu legen. Die Feldlinien des stark divergenten elektrischen Feldes bündeln sich am Ort der inneren Elektrode 58, hier der Elektrodenspitze. Dieser Ort entspricht gleichzeitig dem Ort der höchsten Felddivergenz. In Folge dessen werden dissektierte Proben in Richtung der inneren Elektrode/Elektrodenspitze 58, also in die Mitte des Bodens des Auffangbehältnisses 56 transferiert.

Die Spannungsversorgung 53 ist Bestandteil einer Steuereinheit 59, die unter anderem dazu geeignet ist, Fehlfunktionen, wie Funkenüberschläge oder Kurzschlüsse, zu registrieren. Außerdem sind mittels der Steuereinheit 59 Spannungsamplitude und zeitlicher Spannungsverlauf steuerbar. Sollte die Steuereinheit 59 eine Fehlfunktion registrieren, kann durch entsprechende Einstellung von Spannungsamplitude und Spannungsverlauf die maximal übertragbare Energiemenge begrenzt werden.

Die äußere Elektrode 57 ist ringförmig (oder ringscheibenförmig) derart geformt, dass sie bei einer Inspektion im Falle einer hier nicht dargestellten Durchlichtbeleuchtung das Licht des Kondensors der Beleuchtungseinrichtung ungehindert passieren lässt. Mit anderen Worten ist hierzu die äußere ringförmige Elektrode 57 mit einem lichtdurchlässigen Innendurchmesser ausgestattet, der im Wesentlichen gleich dem Durchmesser des Beleuchtungsstrahlengangs am Ort der äußeren Elektrode 57 oder größer als dieser ist. Die innere Elektrode und ihre Zuleitung hat hingegen einen möglichst kleinen Querschnitt, um einerseits eine starke Felddivergenz zu gewährleisten und andererseits möglichst viel Licht aus dem Kondensor einer hier nicht dargestellten Durchlichtbeleuchtungseinrichtung passieren zu lassen.

Werden die Elektroden 57 und 58 mit einer Wechselspannung beaufschlagt, kann die dielektrische Kraft auf die dissektierten Proben völlig unabhängig von einer etwaigen Oberflächenladung dieser Proben wirken, wie sie in einigen Fällen durch den Vorgang der Dissektion erzeugt wird. Aufgrund der Wechselspannung mittelt sich die Coulombkraft über die Zeit weg, während die dielektrische Kraft jedoch unabhängig von der Polarität des Feldes ist und nur von der Felddivergenz abhängt. Insofern ist im Falle von elektrostatischen Proben das Anlegen einer Wechselspannung an das Elektrodenpaar 57, 58 besonders zweckmäßig.

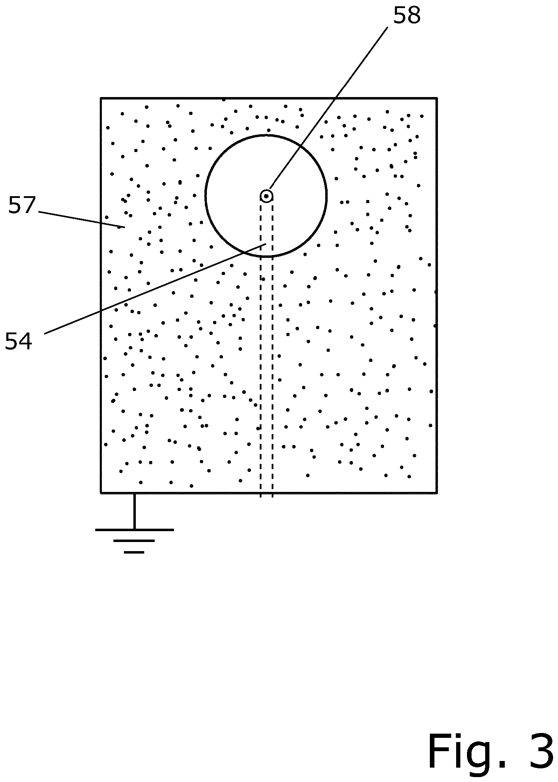

Figur 3 zeigt schematisch eine Ausführungsform eines konzentrischen Elektrodenpaares 57, 58 in Draufsicht. Die äußere (geerdete) Elektrode 57 besteht im Wesentlichen aus einer Elektrodenplatte mit einem kreisrunden Ausschnitt, um die ringförmige Elektrode im Sinne dieser Anmeldung zu bilden. Konzentrisch hierzu ist die innere Elektrode 58 angeordnet, die hier im Wesentlichen als Elektrodenspitze ausgeführt ist. Weiterhin zu sehen ist die Zuleitung 54 zu der inneren Elektrode 58 ausgehend von der Spannungsversorgung 53 bzw. der Steuereinheit 59 (vgl. Figur 2).

### Bezugszeichenliste

- 1: Laser-Mikrodissektionsgerät, Laser-Mikroskopsystem
- 2: Mikroskoptisch
- 3: Objekt
- 4: z-Verstelleinrichtung
- 5: Laser
- 6: Laserstrahl
- 6a: Achse der Laserstrahl-Ausbreitung
- 7: Laserstrahl-Fokus
- 8: Mikroskopobjektiv
- 9: Hauptachse oder optische Achse des Mikroskopobjektivs
- 10: Laser-Scaneinrichtung
- 11: Glas-Keilplatte
- 12: Glas-Keilplatte
- 13: Laser-Umlenkeinheit
- 14: optische Achse der Lasereinheit
- 15: optische Fokus-Verschiebeeinrichtung
- 16: Linse
- 17: Abschwächer
- 18: Linse
- 19: Linse
- 20: Objekthalter

- 30: Mikroskop
- 31: Umlenkelement
- 32: Umlenkelement
- 33: Umlenkelement
- 34: Tubus

- 36: Apertureinrichtung
- 40: Beleuchtungseinrichtung
- 41: Beleuchtungslichtquelle
- 42: Beleuchtungsoptik
- 43: Beleuchtungsstrahlengang
- 44: Umlenkelement

- 50: Sammeleinrichtung
- 53: Spannungsversorgung
- 54: Zuleitung
- 56: Auffangbehältnis
- 57: äußere Elektrode
- 58: innere Elektrode
- 59: Steuereinheit

## Patentansprüche

1. Sammeleinrichtung (50) zum Sammeln von aus einem Objekt (3) dissektierten oder ablatierten Proben mit
einem Auffangbehältnis (56) zum Auffangen der dissektierten oder ablatierten Proben, und
einem Elektrodenpaar (57, 58), das auf der dem Objekt (3) abgewandten Seite des Bodens des Auffangbehältnisses (56) oder am oder im Boden selbst angeordnet ist, und mit
einer Spannungsversorgung (53) zum Anlegen einer Spannung an die Elektroden des Elektrodenpaars (57, 58),
wobei ein konzentrisch angeordnetes Elektrodenpaar (57, 58) vorgesehen ist und die an das Elektrodenpaar (57, 58) angelegte Spannung zumindest im Bereich des Auffangbehältnisses (56) ein divergentes elektrisches Feld erzeugt, **dadurch gekennzeichnet, dass** das konzentrisch angeordnete Elektrodenpaar (57, 58) eine als Elektrodenspitze ausgebildete innere Elektrode (58) umfasst.

2. Sammeleinrichtung (50) nach Anspruch 1, wobei das konzentrisch angeordnete Elektrodenpaar (57, 58) eine ringförmige äußere Elektrode (57) umfasst.

3. Sammeleinrichtung (50) nach einem der vorangehenden Ansprüche, wobei die Spannungsversorgung (53) eine Wechselspannung liefert.

4. Sammeleinrichtung (50) nach einem der vorangehenden Ansprüche, wobei die Spannungsversorgung (53) mittels einer Steuereinheit (59) bezüglich Spannungsamplitude und/oder zeitlichem Spannungsverlauf steuerbar oder regelbar ist.

5. Sammeleinrichtung (50) gemäß einem der vorangehenden Ansprüche, wobei die Spannungsversorgung (53) eine Hochspannung, insbesondere zwischen 100 Volt bis 10 kV, liefert.

6. Sammeleinrichtung (50) gemäß einem der vorangehenden Ansprüche, wobei die an das Elektrodenpaar (57, 58) angelegte Spannung innerhalb des Auffangbehältnisses (56) und im Bereich seiner Umgebung bis zum Ort der Dissektion oder Ablation ein divergentes elektrisches Feld erzeugt.

7. Sammeleinrichtung (50) gemäß einem der vorangehenden Ansprüche, wobei mehrere Elektrodenpaare (57, 58) zu einem Array verschaltet sind, von denen zumindest einzelne Elektrodenpaare (57, 58) auf der dem Objekt (3) abgewandten Seite des Bodens eines einzelnen Auffangbehältnisses (56) oder im oder am Boden selbst oder auf der dem Objekt (3) abgewandten Seite des Bodens jeweils eines Auffangbehältnisses (56) oder im oder am jeweiligen Boden selbst angeordnet sind.

8. Laser-Mikroskopsystem (1) zur Dissektion oder Ablation von Proben aus einem Objekt (3) mit
einem Mikroskop (30) mit einem Objekthalter (20) zur Aufnahme des Objekts (3) und einem Objektiv (8), das eine optische Achse (9) definiert, mit einem Laser (5) und einem vom Laser (5) erzeugten Laserstrahl (6) zur Dissektion oder Ablation einer Probe aus dem Objekt (3) und mit einer Sammeleinrichtung (50) zum Sammeln von aus dem Objekt (3) dissektierten oder ablatierten Proben gemäß einem der Ansprüche 1 bis 7.

9. Laser-Mikroskopsystem (1) nach Anspruch 8, wobei der Objekthalter (20) auf einem Mikroskoptisch (2) angeordnet ist, wobei der Mikroskoptisch (2) geerdet oder nicht-leitend ist.

10. Laser-Mikroskopsystem (1) nach Anspruch 8 oder 9, wobei der Objekthalter (20) geerdet oder nicht-leitend ist.

11. Laser-Mikroskopsystem (1) nach einem der Ansprüche 8 bis 10, wobei die Sammeleinrichtung (50) ein konzentrisch angeordnetes Elektrodenpaar (57, 58) aufweist, wobei die äußere Elektrode (57) geerdet ist.

12. Laser-Mikroskopsystem (1) nach Anspruchll, wobei die innere Elektrode (58) auf einer Hochspannung, insbesondere von 100 Volt bis 10 kV, liegt.

13. Laser-Mikroskopsystem (1) nach einem der Ansprüche 11 oder 12, wobei die innere Elektrode (58) auf oder nahe der optischen Achse (9) angeordnet ist.

14. Laser-Mikroskopsystem (1) nach einem der Ansprüche 8 bis 13, wobei das Laser-Mikroskopsystem (1) eine Beleuchtungseinrichtung (40) aufweist, die einen Beleuchtungsstrahlengang (43) erzeugt und diesen auf eine Objektebene des Mikroskops (30) richtet.

15. Laser-Mikroskopsystem (1) nach Anspruch 14 mit einer Sammeleinrichtung (50) nach Anspruch 2, wobei die äußere ringförmige Elektrode (57) einen Durchmesser aufweist, der im Wesentlichen gleich dem Durchmesser des Beleuchtungsstrahlengangs (43) am Ort der äußeren Elektrode (57) oder größer als dieser ist.

16. Verfahren zum Sammeln von aus einem Objekt (3) dissektierten oder ablatierten Proben unter Verwendung einer Sammeleinrichtung (50) nach einem der Ansprüche 1 bis 7 oder unter Verwendung eines Laser-Mikroskopsystems (1) nach einem der Ansprüche 8 bis 15, wobei eine Probe aus einem Objekt (3) dissektiert oder ablatiert wird und die dissektierte oder ablatierte Probe in das Auffangbehältnis (56) der Sammeleinrichtung (50) transferiert wird, wobei das Elektrodenpaar (57, 58) der Sammeleinrichtung (50) derart am Auffangbehältnis (56) angeordnet ist, dass nach Anlegen einer Spannung an das Elektrodenpaar (57, 58) mittels der Spannungsversorgung (53) der Sammeleinrichtung (50) im Bereich des Auffangbehältnisses (56) ein elektrisches Feld mit einer vorbestimmten Felddivergenz erzeugt wird, so dass auf die dissektierte oder ablatierte Probe eine dielektrische Kraft wirkt, die die Probe in das Innere des Auffangbehältnisses (56) lenkt.

17. Verfahren nach Anspruch 16, wobei durch Wahl eines geeigneten Auffangbehältnisses (56) und/oder eines in einen Bereich zwischen dem Elektrodenpaar (57, 58) und dem Objekthalter (20) eingebrachten dielektrischen Medium Stärke und/oder Verlauf und/oder Divergenz des divergenten elektrischen Feldes beeinflusst wird.

18. Verfahren nach Anspruch 16 oder 17 wobei das Objekt (3) oder zumindest die zu dissektierende oder ablatierende Probe mit einem Dielektrikum oder einem Halbleiter oder einem Leiter beschichtet wird, bevor die Dissektion oder Ablation der Probe erfolgt.

## Claims

1. A collecting device (50) for collecting samples dissected or ablated from an object (3) with
a collection container (56) for collecting the dissected or ablated samples, and
a pair of electrodes (57, 58) arranged on the side of the bottom of the collecting container (56) facing away from the object (3) or on or in the bottom itself, and with
a power supply (53) for applying a voltage to the electrodes of the electrode pair (57, 58),
wherein a concentrically arranged pair of electrodes (57, 58) is provided and the voltage applied to the pair of electrodes (57, 58) generates a divergent electric field at least in the region of the collecting container (56), **characterised in that** the concentrically arranged pair of electrodes (57, 58) comprises an inner electrode (58) formed as an electrode tip.

2. The collecting device (50) of claim 1, wherein the concentrically arranged pair of electrodes (57, 58) comprises an annular outer electrode (57).

3. The collecting device (50) according to any one of the preceding claims, wherein the power supply (53) provides an AC voltage.

4. The collecting device (50) according to any one of the preceding claims, wherein the voltage supply (53) can be controlled or regulated by means of a control unit (59) with respect to voltage amplitude and/or temporal voltage progression.

5. The collecting device (50) according to any one of the preceding claims, wherein the voltage supply (53) provides a high voltage, in particular between 100 volts to 10 kV.

6. The collecting device (50) according to any one of the preceding claims, wherein the voltage applied to the pair of electrodes (57, 58) generates a divergent electric field within the collecting container (56) and in the region of its surroundings up to the site of dissection or ablation.

7. The collecting device (50) according to any one of the preceding claims, wherein a plurality of electrode pairs (57, 58) are connected to form an array, of which at least individual electrode pairs (57, 58) are arranged on the side of the bottom of an individual collecting container (56) facing away from the object (3) or in or on the bottom itself or on the side of the bottom of a respective collecting container (56) facing away from the object (3) or in or on the respective bottom itself.

8. A laser microscope system (1) for dissection or ablation of specimens from an object (3) with
a microscope (30) having an object holder (20) for receiving the object (3) and an objective (8) defining an optical axis (9),
with a laser (5) and a laser beam (6) generated by the laser (5) for dissection or ablation of a sample from the object (3) and with a collecting device (50) for collecting samples dissected or ablated from the object (3) according to any of claims 1 to 7 .

9. The laser microscope system (1) according to claim 8, wherein the object holder (20) is arranged on a microscope stage (2), wherein the microscope stage (2) is earthed or non-conductive.

10. The laser microscope system (1) according to claim 8 or 9, wherein the object holder (20) is earthed or non-conductive.

11. The laser microscope system (1) according to any one of claims 8 to 10, wherein the collecting device (50) comprises a concentrically arranged pair of electrodes (57, 58), the outer electrode (57) being grounded.

12. The laser microscope system (1) according to claim 11, wherein the inner electrode (58) is at a high voltage, in particular from 100 volts to 10 kV.

13. The laser microscope system (1) according to any one of the claims 11 or 12, wherein the inner electrode (58) is arranged on or near the optical axis (9).

14. The laser microscope system (1) according to any one of claims 8 to 13, wherein the laser microscope system (1) comprises an illumination device (40) that generates an illumination beam path (43) and directs it onto an object plane of the microscope (30).

15. The laser microscope system (1) according to claim 14 comprising a collecting device (50) according to claim 2, wherein the outer annular electrode (57) has a diameter substantially equal to or greater than the diameter of the illumination beam path (43) at the location of the outer electrode (57).

16. A method for collecting samples dissected or ablated from an object (3) using a collecting device (50) according to any one of claims 1 to 7 or using a laser microscope system (1) according to any one of claims 8 to 15, wherein a sample is dissected or ablated from an object (3) and the dissected or ablated sample is transferred into the collecting container (56) of the collecting device (50), wherein the electrode pair (57, 58) of the collecting device (50) is arranged on the collecting container (56) in such a way that, after application of a voltage to the pair of electrodes (57, 58) by means of the voltage supply (53) of the collecting device (50), an electric field with a predetermined field divergence is generated in the region of the collecting container (56), so that a dielectric force acts on the dissected or ablated sample, which directs the sample into the interior of the collecting container (56).

17. The method according to claim 16, wherein the strength and/or course and/or divergence of the divergent electric field is influenced by selecting a suitable collecting container (56) and/or a dielectric medium introduced into a region between the pair of electrodes (57, 58) and the object holder (20).

18. The method according to claim 16 or 17, wherein the object (3) or at least the sample to be dissected or ablated is coated with a dielectric or a semiconductor or a conductor before the dissection or ablation of the sample takes place.

## Revendications

1. Dispositif de collecte (50) pour collecter des échantillons disséqués ou abattus d'un objet (3) avec
un récipient collecteur (56) pour recueillir les échantillons disséqués ou abattus, et
une paire d'électrodes (57, 58), qui est disposée sur le côté du fond du récipient collecteur (56) opposé à l'objet (3) ou sur ou dans le fond lui-même, et avec
une alimentation en tension (53) pour appliquer une tension aux électrodes de la paire d'électrodes (57, 58),
une paire d'électrodes (57, 58) disposée de manière concentrique étant prévue et la tension appliquée à la paire d'électrodes (57, 58) générant un champ électrique divergent au moins dans la zone du récipient collecteur (56), **caractérisé en ce que** la paire d'électrodes (57, 58) disposée de manière concentrique comprend une électrode intérieure (58) réalisée sous forme de pointe d'électrode.

2. Dispositif de collecte (50) selon la revendication 1, dans lequel la paire d'électrodes (57, 58) disposées de manière concentrique comprend une électrode extérieure annulaire (57).

3. Dispositif de collecte (50) selon l'une des revendications précédentes, dans lequel l'alimentation en tension (53) fournit une tension alternative.

4. Dispositif de collecte (50) selon l'une des revendications précédentes, dans lequel l'alimentation en tension (53) peut être commandée ou réglée au moyen d'une unité de commande (59) en ce qui concerne l'amplitude de la tension et/ou l'évolution temporelle de la tension.

5. Dispositif de collecte (50) selon l'une quelconque des revendications précédentes, dans lequel l'alimentation en tension (53) fournit une haute tension, notamment comprise entre 100 volts et 10 kV.

6. Dispositif de collecte (50) selon l'une des revendications précédentes, dans lequel la tension appliquée à la paire d'électrodes (57, 58) génère un champ électrique divergent à l'intérieur du réceptacle (56) et dans la zone de son environnement jusqu'au lieu de la dissection ou de l'ablation.

7. Dispositif de collecte (50) selon l'une des revendications précédentes, dans lequel plusieurs paires d'électrodes (57, 58) sont connectées en un réseau, dont au moins certaines paires d'électrodes (57, 58) sont disposées sur le côté du fond d'un récipient de collecte individuel (56) opposé à l'objet (3) ou dans ou sur le fond lui-même, ou sur le côté du fond de chaque récipient de collecte (56) opposé à l'objet (3) ou dans ou sur le fond respectif lui-même.

8. Système de microscope à laser (1) pour la dissection ou l'ablation d'échantillons d'un objet (3) avec
un microscope (30) avec un porte-objet (20) pour recevoir l'objet (3) et un objectif (8) qui définit un axe optique (9),
avec un laser (5) et un faisceau laser (6) généré par le laser (5) pour la dissection ou l'ablation d'un échantillon de l'objet (3) et avec un dispositif de collecte (50) pour collecter des échantillons disséqués ou abattus de l'objet (3) selon l'une des revendications 1 à 7 .

9. Système de microscope à laser (1) selon la revendication 8, dans lequel le porte-objet (20) est disposé sur une platine de microscope (2), la platine de microscope (2) étant mise à la terre ou non conductrice.

10. Système de microscope à laser (1) selon la revendication 8 ou 9 , dans lequel le porte-objet (20) est mis à la terre ou non conducteur.

11. Système de microscope laser (1) selon l'une quelconque des revendications 8 à 10, dans lequel le dispositif de collecte (50) comprend une paire d'électrodes (57, 58) disposées de manière concentrique, l'électrode extérieure (57) étant mise à la terre.

12. Système de microscope à laser (1) selon la revendication 11, dans lequel l'électrode interne (58) est à une haute tension, en particulier de 100 volts à 10 kV.

13. Système de microscope à laser (1) selon l'une des revendications 11 ou 12, dans lequel l'électrode interne (58) est disposée sur l'axe optique (9) ou à proximité de celui-ci.

14. Système de microscope à laser (1) selon l'une des revendications 8 à 13, dans lequel le système de microscope à laser (1) comporte un dispositif d'éclairage (40) qui produit un trajet de faisceau d'éclairage (43) et le dirige sur un plan objet du microscope (30).

15. Système de microscope laser (1) selon la revendication 14, comprenant un dispositif de collecte (50) selon la revendication 2, dans lequel l'électrode annulaire externe (57) a un diamètre sensiblement égal ou supérieur au diamètre du trajet optique d'illumination (43) à l'emplacement de l'électrode externe (57).

16. Procédé de collecte d'échantillons disséqués ou abattus d'un objet (3) en utilisant un dispositif de collecte (50) selon l'une des revendications 1 à 7 ou en utilisant un système de microscope à laser (1) selon l'une des revendications 8 à 15, dans lequel un échantillon est disséqué ou abbatu d'un objet (3) et l'échantillon disséqué ou abbatu est transféré dans le récipient collecteur (56) du dispositif de collecte (50), la paire d'électrodes (57, 58) du dispositif de collecte (50) est disposé sur le récipient collecteur (56) de telle sorte qu'après application d'une tension à la paire d'électrodes (57, 58) au moyen de l'alimentation en tension (53) du dispositif de collecte (50), un champ électrique présentant une divergence de champ prédéterminée est généré dans la zone du récipient collecteur (56), de sorte qu'une force diélectrique agit sur l'échantillon disséqué ou ablati, qui dirige l'échantillon vers l'intérieur du récipient collecteur (56).

17. Procédé selon la revendication 16, dans lequel l'intensité et/ou l'allure et/ou la divergence du champ électrique divergent sont influencées par le choix d'un récipient collecteur (56) approprié et/ou d'un milieu diélectrique introduit dans une zone entre la paire d'électrodes (57, 58) et le porte-objet (20).

18. Procédé selon la revendication 16 ou 17, dans lequel l'objet (3) ou au moins l'échantillon à disséquer ou à ablater est revêtu d'un diélectrique ou d'un semi-conducteur ou d'un conducteur avant que la dissection ou l'ablation de l'échantillon ne soit effectuée.
